# EUROPÄISCHE PATENTANMELDUNG

(11) **EP 4 563 968 A1**
(43) Veröffentlichungstag der Anmeldung: **04.06.2025**
(21) Anmeldenummer: 24214814.6
(22) Anmeldetag: 22.11.2024
(51) Int. Cl.: G01N 1/28, G02B 21/32

(54) **LASERMIKRODISSEKTIONSSYSTEM UND VERFAHREN ZUR LASERMIKRODISSEKTION**

(30) Priorität: 30.11.2023 DE 102023133508
(71) Anmelder: Leica Microsystems CMS GmbH, 35578 Wetzlar (DE)
(72) Erfinder: Greb, Christoph, 35578 Wetzlar (DE); Marr, James, 35578 Wetzlar (DE)
(74) Vertreter: Schaumburg und Partner Patentanwälte mbB

(57) **Zusammenfassung**

Ein Lasermikrodissektionssystem (100) umfasst einen Mikroskoptisch (110), der dazu ausgebildet ist, eine zu schneidende Probe (102) und eine Auffangeinheit (108), die zumindest ein unterhalb der Probe (102) angeordnetes Auffanggefäß (106) umfasst, aufzunehmen. Das zumindest eine Auffanggefäß (106) ist derart angeordnet und dazu ausgebildet, ein aus der Probe (102) geschnittenes Dissektat (104) aufzufangen. Das Lasermikrodissektionssystem (100) umfasst ferner eine optische Detektionseinheit (132), die dazu ausgebildet ist, ein Inhaltsbild eines Inneren des zumindest einen Auffanggefäßes (106) zu erfassen und dem Inhaltsbild entsprechende Inhaltsbilddaten zu erzeugen, und eine Steuereinheit (136). Die Steuereinheit (136) ist dazu ausgebildet, die Inhaltsbilddaten zu verarbeiten und auf Grundlage der Inhaltsbilddaten und unter Berücksichtigung von Vorherbilddaten, die einem Vorherbild des Inneren des zumindest einen Auffanggefäßes (106) entsprechen, das aufgenommen wurde, bevor das Dissektat (104) aus der Probe (102) geschnitten wurde, und/oder unter Berücksichtigung von Referenzbilddaten, die einem Referenzbild eines Inneren eines Auffanggefäßes (106) von gleichem Typ wie das zumindest eine Auffanggefäß (106) entsprechen, zu ermitteln, ob sich das Dissektat (104) in dem zumindest einen Auffanggefäß (106) befindet.

## Beschreibung

### Technisches Gebiet

Die Erfindung betrifft ein Lasermikrodissektionssystem sowie ein Verfahren zur Lasermikrodissektion.

### Hintergrund der Erfindung

Bei der Lasermikrodissektion wird eine Probe mit einem Laser geschnitten, um einen kleinen Teil der Probe, ein so genanntes Dissektat, zu entnehmen. Aus dem Stand der Technik sind Lasermikrodissektionssysteme bekannt, welche die Schwerkraft nutzen, um das aus der Probe herausgeschnittene Dissektat in einem unterhalb der Probe angeordneten Auffanggefäß aufzufangen, beispielsweise einem PCR-Röhrchen oder einem Well einer Multiwellplatte. Das Auffinden des Dissektates in dem Auffanggefäß kann mitunter sehr zeitaufwendig sein, da das Dissektat im Vergleich zu der abzusuchenden Fläche sehr klein ist. Dazu kommt, dass sich das Dissektat nicht nur auf einem Boden des Auffanggefäßes befinden kann, sondern auch an einer Wand des Auffanggefäßes, so dass nicht nur eine Fläche, sondern ein Volumen nach dem Dissektat abgesucht werden muss. Insbesondere bei Hochdurchsatzexperimenten, bei denen beispielsweise Multiwellplatten mit 96 oder 384 Wells verwendet werden, macht sich der Zeitverlust negativ bemerkbar.

### Zusammenfassung

Aufgabe der Erfindung ist es daher, ein Lasermikrodissektionssystem und ein Verfahren zur Lasermikrodissektion anzugeben, die es ermöglichen, schnell und einfach zu ermitteln, ob ein Dissektat in einem Auffanggefäß aufgefangen wurde.

Diese Aufgabe wird durch ein Lasermikrodissektionssystem mit den Merkmalen des Anspruchs 1 und durch ein Verfahren mit den Merkmalen des unabhängigen Verfahrensanspruchs gelöst. Vorteilhafte Weiterbildungen sind in den abhängigen Ansprüchen angegeben.

Das vorgeschlagene Lasermikrodissektionssystem umfasst einen Mikroskoptisch, der dazu ausgebildet ist, eine zu schneidende Probe und eine Auffangeinheit, die zumindest ein unterhalb der Probe angeordnetes Auffanggefäß umfasst, aufzunehmen. Das zumindest eine Auffanggefäß ist derart angeordnet und dazu ausgebildet, ein aus der Probe geschnittenes Dissektat aufzufangen. Das Lasermikrodissektionssystem umfasst ferner eine optische Detektionseinheit, die dazu ausgebildet ist, ein Inhaltsbild eines Inneren des zumindest einen Auffanggefäßes zu erfassen und dem Inhaltsbild entsprechende Inhaltsbilddaten zu erzeugen, und eine Steuereinheit. Die Steuereinheit ist dazu ausgebildet, die Inhaltsbilddaten zu verarbeiten und auf Grundlage der Inhaltsbilddaten und unter Berücksichtigung von Vorherbilddaten, die einem Vorherbild des Inneren des zumindest einen Auffanggefäßes entsprechen, das aufgenommen wurde, bevor das Dissektat aus der Probe geschnitten wurde, und/oder unter Berücksichtigung von Referenzbilddaten, die einem Referenzbild eines Inneren eines Auffanggefäßes von gleichem Typ wie das zumindest eine Auffanggefäß entsprechen, zu ermitteln, ob sich das Dissektat in dem zumindest einen Auffanggefäß befindet.

Das Lasermikrodissektionssystem weist eine Laserlichtquelle auf und ist dazu ausgebildet, mit Hilfe von der Laserlichtquelle erzeugten Laserstrahls einen kleinen Teil der Probe, das Dissektat, auszuschneiden. Das Dissektat fällt dann unter dem Einfluss der Schwerkraft in das zumindest eine Auffanggefäß. Um nun herausfinden zu können, ob das Dissektat korrekt im dem zumindest einen Auffanggefäß aufgefangen wurde, wird das zumindest eine Auffanggefäß inspiziert. Im Stand der Technik erfolgt das Inspizieren von Auffanggefäßen manuell und visuell, d.h. die Auffanggefäße werden manuell in der Höhe und/oder lateral verstellt und visuell nach dem Dissektat abgesucht. Bei dem vorgeschlagenen Lasermikrodissektionssystem ist dieser Prozess automatisiert. Damit ermöglicht das vorgeschlagene Lasermikrodissektionssystem schnell und einfach zu ermitteln, ob das Dissektat in dem zumindest einen Auffanggefäß aufgefangen wurde. Dies spart insbesondere bei Hochdurchsatzexperimenten viel Zeit.

Um das zumindest eine Auffanggefäß zu inspizieren, erfasst das Lasermikrodissektionssystem das Inhaltsbild, nachdem das Dissektat aus der Probe geschnitten wurde. Das Lasermikrodissektionssystem ermittelt dann auf Grundlage des Inhaltsbildes, ob sich das Dissektat in dem zumindest einen Auffanggefäß befindet, d.h. ob das Dissektat korrekt aufgefangen wurde.

Als weitere Grundlage für diese Ermittlung dient beispielsweise das Vorherbild, d.h. ein Bild des Inneren des zumindest einen Auffanggefäßes, das aufgenommen wurde, direkt bevor das Dissektat aus der Probe geschnitten wurde. So kann das Lasermikrodissektionssystem beispielsweise durch einen Vergleich des Inhaltsbildes mit dem Vorherbild ermitteln, ob das Dissektat korrekt aufgefangen wurde. Ferner kann das Referenzbild als die Grundlage oder eine weitere Grundlage für die Ermittlung dienen. Bei dem Referenzbild handelt es sich um ein Bild des Inneren eines Auffanggefäßes von gleichem Typ wie das zumindest eine Auffanggefäß. Ist beispielsweise das zumindest eine Auffanggefäß eine Kappe eines PCR-Röhrchens, so ist das Referenzbild ein Bild einer Kappe eines weiteren PCR-Röhrchens mit den gleichen Abmessungen wie das zumindest eine Auffanggefäß.

Die zu schneidende Probe kann ein Gewebeschnitt oder ein ähnlich dünnes biologisches Präparat sein und ist beispielsweise durch eine Membran an einem Probenträger befestigt. Das Auffanggefäß kann insbesondere ein PCR-Röhrchen, eine Verschlusskappe eines PCR-Röhrchens oder ein Well einer Multiwellplatte sein. Aber auch andere gängige Labormaterialien wie beispielsweise eine Petrischale können als das Auffanggefäß verwendet werden.

Bei einer weiteren Ausführungsform ist die Steuereinheit dazu ausgebildet, auf Grundlage der Inhaltsbilddaten eine Position des Dissektates in dem Inneren des zumindest einen Auffanggefäßes zu ermitteln. Die Position des Dissektates kann beispielsweise dazu verwendet werden, um ein Verifikationsbild zu erfassen, mit dem überprüft werden kann, dass sich das Dissektat wirklich in dem Inneren des zumindest einen Auffanggefäßes befindet. So kann sichergestellt werden, dass die Steuereinheit korrekt ermittelt hat, dass sich das Dissektat in dem zumindest einen Auffanggefäß befindet. Diese Information kann ferner dazu verwendet werden, die Verarbeitung der Inhaltsbilddaten durch die Steuereinheit zu verbessern, um eine zuverlässigere Ermittlung zu ermöglichen. Die Position des Dissektates kann ferner dazu verwendet werden, um ein Detailbild des Dissektates mit einer hohen Vergrößerung zu erfassen.

Bei einer weiteren Ausführungsform ist die Steuereinheit dazu ausgebildet, die Inhaltsbilddaten mit den Vorherbilddaten und/oder den Referenzbilddaten zu vergleichen und auf Grundlage dieses Vergleiches zu ermitteln, ob sich das Dissektat in dem zumindest einen Auffanggefäß befindet. Bei dieser Ausführungsform führt die Steuereinheit beispielsweise einen Bildvergleich zwischen dem Inhaltsbild und dem Vorherbild und/oder dem Referenzbild durch, um zu ermitteln, ob das Dissektat korrekt in dem zumindest einen Auffanggefäß aufgefangen wurde. Ein solcher Bildvergleich kann insbesondere unter Verwendung bekannter Bildvergleichsalgorithmen erfolgen. Durch den Bildvergleich kann die Steuereinheit schnell und besonders einfach ermitteln, ob sich das Dissektat in dem zumindest einen Auffanggefäß befindet.

Bei einer weiteren Ausführungsform ist die Steuereinheit dazu ausgebildet, unter Verwendung eines Maschinenlernverfahrens zu ermitteln, ob sich das Dissektat in dem zumindest einen Auffanggefäß befindet. Als das Maschinenlernverfahren kann die Steuereinheit beispielsweise ein oder mehrere neuronale Netzwerke verwenden, zum Beispiel ein Convolutional Neural Network, einen Autoencoder oder ein Generative Adversarial Network. Ferner kann die Steuereinheit auch weitere Verfahren, wie beispielsweise Entscheidungsbäume, Random Forests oder ein K-Nearest Neighbors Verfahren, als das Maschinenlernverfahren verwenden. Maschinenlernverfahren können Merkmale in Bildern mit hoher Präzision identifizieren. Sie sind oft in der Lage, Muster und Details zu erkennen, die für das menschliche Auge schwer zu unterscheiden sind. Damit sind Maschinenlernverfahren besonders geeignet, das Dissektat in dem Inhaltsbild zu erkennen. Durch die Verwendung des Maschinenlernverfahrens kann die Steuereinheit somit besonders zuverlässig ermitteln, ob sich das Dissektat in dem zumindest einen Auffanggefäß befindet.

Bei einer weiteren Ausführungsform ist das Maschinenlernverfahren unter Verwendung zumindest der Referenzbilddaten als Trainingsdaten darauf trainiert worden, zu ermitteln, ob sich das Dissektat in dem zumindest einen Auffanggefäß befindet. Zum Beispiel wurde das Maschinenlernverfahren darauf trainiert, das Dissektat in dem Inhaltsbild zu erkennen und beispielsweise von Kratzern, Verschmutzungen oder anderen Objekten in dem Inneren des Auffanggefäßes zu unterscheiden. Insbesondere ist das Maschinenlernverfahren darauf trainiert worden, die Inhaltsbilddaten mit den Vorherbilddaten und/oder den Referenzbilddaten zu vergleichen und auf Grundlage dieses Vergleiches zu ermitteln, ob sich das Dissektat in dem zumindest einen Auffanggefäß befindet.

Bei einer weiteren Ausführungsform ist das Maschinenlernverfahren darauf trainiert worden, eine Bildsegmentierung des Inhaltsbildes durchzuführen, um zu ermitteln, ob sich das Dissektat in dem zumindest einen Auffanggefäß befindet. Bei der Bildsegmentierung wird das Inhaltsbild in Bereiche unterteilt. Jeder Bereich entspricht einem unterschiedlichen Teil des Inhaltsbildes, beispielsweise dem Dissektat, dem Boden oder der Wand des zumindest einen Auffanggefäßes, einem Kratzer oder einer Verschmutzung. Auf Grundlage der Bildsegmentierung kann besonders zuverlässig ermittelt werden, ob sich das Dissektat in dem zumindest einen Auffanggefäß befindet.

Bei einer weiteren Ausführungsform ist die Steuereinheit dazu ausgebildet, zumindest die optische Detektionseinheit anzusteuern, um das Inhaltsbild als ein Volumenbild und/oder ein Bild mit erweiterter Tiefenschärfe zu erfassen. Zum Beispiel kann die Steuereinheit dazu ausgebildet sein, ein auf das Auffanggefäß gerichtetes Objektiv der Detektionseinheit anzusteuern, um die Fokuslage der Detektionseinheit entlang der optischen Achse zu verschieben. Auf diese Weise können mit Hilfe der Detektionseinheit mehrere parallele Ebenen innerhalb des Auffanggefäßes erfasst werden, um das Inhaltsbild als ein Volumenbild und/oder ein Bild mit erweiterter Tiefenschärfe zu erfassen. Um ein Bild mit erweiterter Tiefenschärfe (auch extended depth of field oder edof Bild) zu erhalten, werden typischerweise Bilder mit verschiedenen Fokuslagen zu einem einzigen Bild zusammengesetzt, das eine hohe Tiefenschärfe hat. Gegenüber einem Volumenbild hat dies den Vorteil, dass ein Bild mit erweiterter Tiefenschärfe weniger Speicherplatz benötigt. Bei dieser Ausführungsform erzeugt das Lasermikrodissektionssystem das Inhaltsbild derart, dass das gesamte Innere des zumindest einen Auffanggefäßes scharf abgebildet ist. Hierdurch kann auch dann sehr zuverlässig ermittelt werden, ob sich das Dissektat in dem zumindest einen Auffanggefäß befindet, wenn sich das Dissektat beispielsweise an einer Wand des zumindest einen Auffanggefäßes befindet.

Bei einer weiteren Ausführungsform ist der Mikroskoptisch motorisch entlang einer optischen Achse der optischen Detektionseinheit verfahrbar. Die Steuereinheit kann dazu ausgebildet sein, den Mikroskoptisch entlang der optischen Achse der optischen Detektionseinheit zu verfahren, um das Inhaltsbild als ein Volumenbild und/oder ein Bild mit erweiterter Tiefenschärfe zu erfassen. Beispielsweise kann der Mikroskoptisch mit Hilfe eines Piezomotors sehr genau verfahren werden. Bei dieser Ausführungsform werden statt der Fokuslage der optischen Detektionseinheit die Auffangeinheit und/oder das zumindest eine Auffanggefäß entlang der optischen Achse der optischen Detektionseinheit verfahren, um mehrere parallele Ebenen innerhalb des Auffanggefäßes zu erfassen. Auch dies ermöglicht es mit den vorgenannten Vorteilen, das Inhaltsbild als ein Volumenbild und/oder ein Bild mit erweiterter Tiefenschärfe zu erfassen.

Bei einer weiteren Ausführungsform ist die Steuereinheit dazu ausgebildet, unter Berücksichtigung einer Größe des Dissektates zu ermitteln, ob sich das Dissektat in dem zumindest einen Auffanggefäß befindet. Die Größe des Dissektates kann beispielsweise eine Länge, eine Breite, ein Durchmesser oder die Fläche des Dissektates sein und beispielsweise automatisch auf Grundlage des Bereichs der Probe ermittelt werden, aus dem das Dissektat herausgeschnitten wurde. Dieser Bereich wird auch region of interest oder ROI genannt. Unter Berücksichtigung der Größe des Dissektates kann dieses wesentlich zuverlässiger in dem Inhaltsbild gefunden und von beispielsweise Kratzer oder Verschmutzungen des zumindest einen Auffanggefäßes unterschieden werden.

Bei einer weiteren Ausführungsform umfasst das Lasermikrodissektionssystem eine Benutzereingabeeinheit, die dazu ausgebildet ist, eine Benutzereingabe zu empfangen. Die Steuereinheit kann dazu ausgebildet sein, auf Grundlage einer entsprechenden Benutzereingabe die Größe des Dissektates zu ermitteln. Bei dieser Ausführungsform definiert ein Benutzer beispielsweise durch die Benutzereingabe die Abmessungen des Bereichs der Probe, aus dem das Dissektat herausgeschnitten werden soll. Aus diesen Angaben kann die Steuereinheit dann die Größe des Dissektates ermitteln. Alternativ oder zusätzlich kann der Benutzer die Größe des Dissektates auch direkt eingeben. Die Berücksichtigung der Größe des Dissektates bei der Ermittlung, ob sich das Dissektat in dem zumindest einen Auffanggefäß befindet, hat die obengenannten Vorteile.

Bei einer weiteren Ausführungsform ist die Steuereinheit dazu ausgebildet, die Größe des Dissektates auf Grundlage von Probenbilddaten zu ermitteln, die einem Bild der Probe entsprechen, das erfasst wurde, bevor oder nachdem das Dissektat aus der Probe geschnitten wurde. Bei dieser Ausführungsform erfolgt die Ermittlung der Größe des Dissektates vollautomatisch durch das Lasermikrodissektionssystem. Beispielsweise kann die Steuereinheit anhand eines Bildes, das erfasst wurde, nachdem das Dissektat aus der Probe geschnitten wurde, die Größe des Bereiches der Probe bestimmen, aus dem das Dissektat herausgeschnitten wurde. Die Größe dieses Bereiches ist identisch mit der Größe des Dissektates. Bei einem anderen Beispiel kann die Steuereinheit dazu ausgebildet sein, auf Grundlage der Probenbilddaten, die einem Bild der Probe entsprechen, das erfasst wurde, bevor das Dissektat aus der Probe geschnitten wurde, einen Bereich zu bestimmen, aus dem das Dissektat herausgeschnitten werden soll. Hierzu kann der Benutzer insbesondere bestimmte Strukturen der Probe bestimmen, die von der Steuereinheit automatisch in dem Bild der Probe identifiziert werden, beispielsweise bestimmte Zellen. Auch die Größe dieses Bereiches ist identisch mit der Größe des Dissektates. Die Berücksichtigung der Größe des Dissektates bei der Ermittlung, ob sich das Dissektat in dem zumindest einen Auffanggefäß befindet, hat die obengenannten Vorteile.

Bei einer weiteren Ausführungsform umfasst das Lasermikrodissektionssystem eine Beleuchtungseinheit, die dazu ausgebildet ist, Anregungslicht zum Anregen von Fluorophoren zu emittieren. Die optische Detektionseinheit ist dazu ausgebildet, Fluoreszenzbilder zu erfassen. Bei dieser Ausführungsform ist die Beleuchtungseinheit dazu ausgebildet, beispielsweise in der Probe - und damit auch in dem Dissektat - angeordnete Fluorophore zum Emittieren von Fluoreszenzlicht anzuregen. Beispielsweise umfasst die Beleuchtungseinheit eine oder mehrere Laserlichtquellen zum Erzeugen des Anregungslichtes. Die Fluorophore können insbesondere absichtlich in die Probe eingebrachte Farbstoffe sein, mit denen bestimmte Strukturen der Probe eingefärbt worden sind, beispielsweise Zellkerne.

Dies ermöglicht es, die eingefärbten Strukturen in einem Fluoreszenzbild des Dissektates besonders einfach zu identifizieren.

Bei einer weiteren Ausführungsform ist die Steuereinheit dazu ausgebildet, die Beleuchtungseinheit und die optische Detektionseinheit anzusteuern, um das Inhaltsbild als ein Fluoreszenzbild zu erfassen. Auf Grundlage des von dem Dissektat emittierten Fluoreszenzlichtes kann das Dissektat besonders einfach in dem Inhaltsbild gefunden werden. Damit ist die Ermittlung, ob sich das Dissektat in dem zumindest einen Auffanggefäß befindet, besonders zuverlässig. Bei der in dem Fluoreszenzbild erfassten Fluoreszenz kann es sich insbesondere auch um eigentlich störende Autofluoreszenz handeln, beispielsweise einer dünnen Polymermembran, auf der die Probe und damit auch das Dissektat angeordnet sind. Somit kann bei dieser Ausführungsform ein eigentlich störender Effekt genutzt werden, um zuverlässig ermitteln zu können ob sich das Dissektat in dem zumindest einen Auffanggefäß befindet.

Bei einer weiteren Ausführungsform ist die Steuereinheit dazu ausgebildet, die Beleuchtungseinheit und die optische Detektionseinheit anzusteuern, um ein Verifikationsbild als ein Fluoreszenzbild zu erfassen, wenn die Steuereinheit ermittelt hat, dass sich das Dissektat in dem zumindest einen Auffanggefäß befindet, dem Verifikationsbild entsprechende Verifikationsbilddaten zu erzeugen und auf Grundlage der Verifikationsbilddaten zu bestätigen, dass sich das Dissektat in dem zumindest einen Auffanggefäß befindet. Bei dieser Ausführungsform erfasst das Lasermikrodissektionssystem zunächst das Inhaltsbild, insbesondere als ein Weißlichtbild, und bestimmt anhand des Inhaltsbildes, ob sich das Dissektat in dem zumindest einen Auffanggefäß befindet. Um zu bestätigen, dass diese Ermittlung korrekt war, erfasst das Lasermikrodissektionssystem darauffolgend das Verifikationsbild als ein Fluoreszenzbild. Vorzugsweise bestimmt die Steuereinheit zunächst auf Grundlage der Inhaltsbilddaten die Position des Dissektates in dem zumindest einen Auffanggefäß. Das Lasermikrodissektionssystem kann dann das Verifikationsbild an der ermittelten Position aufnehmen. Mit Hilfe des Verifikationsbildes kann überprüft werden, dass sich das Dissektat wie ermittelt in dem zumindest einen Auffanggefäß befindet. So können Ambiguitäten aufgelöst werden, wenn beispielsweise Kratzer oder Verschmutzungen des zumindest einen Auffanggefäßes fälschlich als das Dissektat identifiziert worden sind. Ferner wird sichergestellt, dass die Steuereinheit korrekt arbeitet.

Die Erfindung betrifft ferner ein Verfahren zur Lasermikrodissektion. Bei dem Verfahren wird eine Probe oberhalb zumindest eines Auffanggefäßes einer Auffangeinheit angeordnet. Das zumindest eine Auffanggefäß ist dabei derart angeordnet und dazu ausgebildet, ein aus der Probe geschnittenes Dissektat aufzufangen. Es wird ein Inhaltsbild eines Inneren des zumindest einen Auffanggefäßes erfasst und es werden dem Inhaltsbild entsprechende Inhaltsbilddaten erzeugt. Auf Grundlage der Inhaltsbilddaten und unter Berücksichtigung von Vorherbilddaten, die einem Vorherbild des Inneren des zumindest einen Auffanggefäßes entsprechen, das aufgenommen wurde, bevor das Dissektat aus der Probe geschnitten wurde, und/oder unter Berücksichtigung von Referenzbilddaten, die einem Referenzbild eines Inneren eines Auffanggefäßes von gleichem Typ wie das zumindest eine Auffanggefäß entsprechen, wird ermittelt, ob sich das Dissektat in dem zumindest einen Auffanggefäß befindet.

Das Verfahren hat dieselben Vorteile wie das beanspruchte Lasermikrodissektionssystem. Insbesondere kann das Verfahren mit den Merkmalen der auf das Lasermikrodissektionssystem gerichteten abhängigen Ansprüche weitergebildet werden. Ferner kann das oben beschriebene Lasermikrodissektionssystem mit den Merkmalen weitergebildet werden, die in diesem Dokument im Zusammenhang mit dem Verfahren beschrieben sind.

### Kurzbeschreibung der Figuren

Ausführungsbeispiele der Erfindung werden im Folgenden anhand der Figuren näher erläutert. Darin zeigen:
- Figur 1: in schematischer Darstellung ein Lasermikrodissektionssystem gemäß einem Ausführungsbeispiel;
- Figur 2: einen Ablaufplan eines Verfahrens zur Lasermikrodissektion; und
- Figur 3: in schematischer Darstellung einen Probenträger auf dem eine Probe angeordnet ist.

### Detaillierte Beschreibung

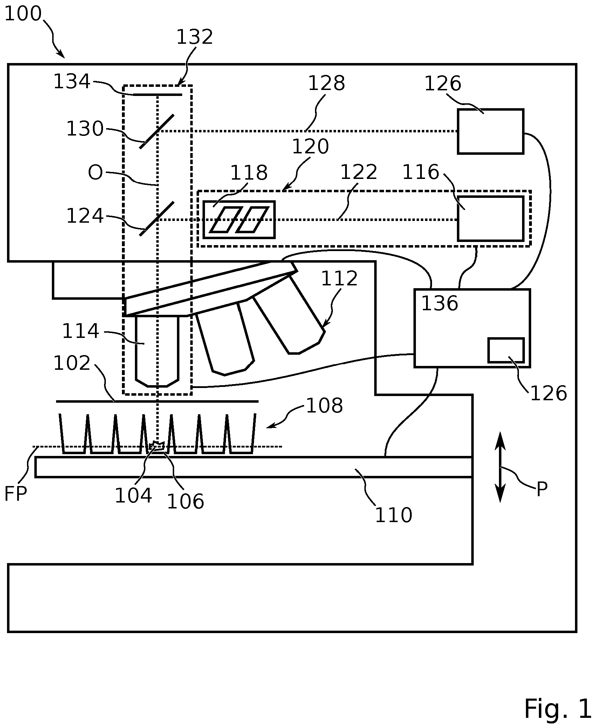

Figur 1 zeigt in schematischer Darstellung ein Lasermikrodissektionssystem 100 gemäß einem Ausführungsbeispiel.

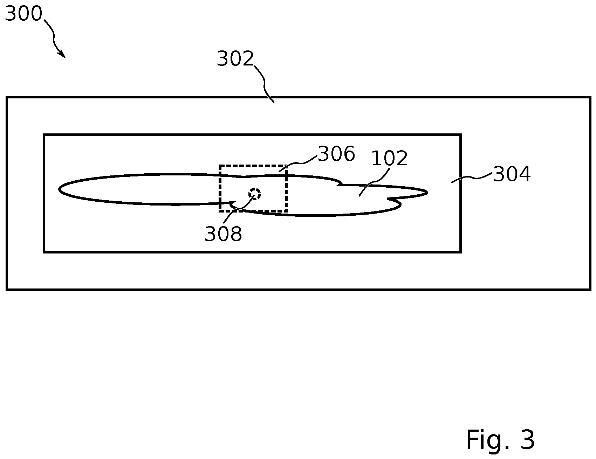

Das Lasermikrodissektionssystem 100 ist dazu ausgebildet, einen kleinen Ausschnitt aus einer mikroskopischen Probe 102 herauszuschneiden, beispielsweise aus einem dünnen Gewebe- oder Organschnitt. Die Probe 102 ist insbesondere durch eine Membran 304 mit einem Probenträger 300 verbunden, der es ermöglicht, insbesondere dünne Proben zu handhaben, ohne diese zu beschädigen. Ein beispielhafter Probenträger 300 ist im Folgenden anhand von Figur 3 beschrieben. Der herausgeschnittene Ausschnitt wird im Kontext der Mikrodissektion auch Dissektat 104 genannt. Bei dem gezeigten Lasermikrodissektionssystem 100 wird das herausgeschnittene Dissektat 104 unter Ausnutzung der Schwerkraft in einem Auffanggefäß 106 aufgefangen, das unterhalb der Probe 102 in einer Auffangeinheit 108 angeordnet ist. Eine solche Anordnung wird auch Laser Capture Microdissection (LCM) System genannt.

Bei dem in Figur 1 gezeigten Ausführungsbeispiel ist die Auffangeinheit 108 rein beispielhaft eine Multiwellplatte mit mehreren Wells, die jeweils ein Auffanggefäß 106 bilden. Alternativ kann das Auffanggefäß 106 auch ein PCR-Röhrchen oder eine Kappe eines PCR-Röhrchens sein, das in einem Rahmen mit mehreren zusätzlichen PCR-Röhrchen angeordnet sein kann. Die Auffangeinheit 108 und/oder einzelne Auffanggefäße 106 können entnehmbar sein, um das Dissektat 104 außerhalb des Lasermikrodissektionssystems 100 weiter verarbeiten zu können.

Die Auffangeinheit 108 ist auf einem Mikroskoptisch 110 des Lasermikrodissektionssystems 100 angeordnet. In dem vorliegenden Ausführungsbeispiel ist der Mikroskoptisch 110 bewegbar, um die Auffangeinheit 108 und die Probe 102 relativ zu dem Körper des Lasermikrodissektionssystems 100 positionieren zu können. Insbesondere ist der Mikroskoptisch 110 entlang einer optischen Achse O des Lasermikrodissektionssystems 100, d.h. in z-Richtung, beweglich. Dies ist in Figur 1 durch einen Doppelpfeil P dargestellt. Hierdurch kann die Auffangeinheit 108 vertikal verschoben werden, um beispielsweise eine Fokuslage FP innerhalb des Auffanggefäßes 106 zu verschieben. Der Mikroskoptisch 110 kann aber auch in der z-Richtung unbeweglich sein.

Das Lasermikrodissektionssystem 100 umfasst rein beispielhaft einen Objektivrevolver 112, an dem Objektive 114 angeordnet sind. Die an dem Objektivrevolver 112 angeordneten Objektive 114 können abwechselnd in die optische Achse O des Lasermikrodissektionssystems 100 geschwenkt werden. Dadurch kann ein Benutzer für verschiedene Aufgaben ein jeweils geeignetes Objektiv 114 auswählen, beispielsweise zum Schneiden der Probe 102, zum Beobachten der Probe 102 oder des Dissektates 104 in dem Auffanggefäß 106 oder zum Inspizieren des Auffanggefäßes 106. Bei dem gezeigten Ausführungsbeispiel ist der Objektivrevolver 112 in Bezug auf das Gehäuse des

Lasermikrodissektionssystems 100 unbeweglich. Bei einem anderen Ausführungsbeispiel kann der Objektivrevolver 112 aber auch entlang der optischen Achse O des Lasermikrodissektionssystems 100, d. h. in z-Richtung, bewegbar sein, sodass die Fokuslage FP des aktuell ausgewählten Objektivs 114 in Bezug auf die Probe 102, das Dissektat 104 und/oder das Auffanggefäß 106 verschoben werden kann. Anstelle eines Objektivrevolvers 112 kann das Lasermikrodissektionssystem 100 auch eine einzige Objektivhalterung aufweisen, an der auswechselbare Objektive 114 angebracht werden können. Die Objektivhalterung kann insbesondere entlang der optischen Achse O des Lasermikrodissektionssystems 100 bewegbar sein, um die Fokuslage FP des momentan angebrachten Objektivs 114 verschieben zu können.

Das Lasermikrodissektionssystem 100 umfasst zudem eine Laserlichtquelle 116 und eine Ablenkeinheit 118, die zusammen eine Schneideeinheit 120 des Lasermikrodissektionssystems 100 bilden. Die Laserlichtquelle 116 ist dazu ausgebildet, Laserlicht 122 zum Schneiden der Probe 102 zu erzeugen. Das erzeugte Laserlicht 122 wird durch die Ablenkeinheit 118 und einen ersten Strahlteiler 124 in das momentan in die optische Achse O des Lasermikrodissektionssystems 100 geschwenkte Objektiv 114 gelenkt und auf die Probe 102 gerichtet. Die Ablenkeinheit 118 ist dazu ausgebildet, einen Zielpunkt des Laserlichtes 122 auf der Probe 102 zum Schneiden der Probe 102 zu bewegen. In einem alternativen Ausführungsbeispiel umfasst das Lasermikrodissektionssystem 100 keine Ablenkeinheit 118, während der Mikroskoptisch 110 senkrecht zu optischen Achse O bewegbar ist, sodass der Zielpunkt auf der Probe 102 mit Hilfe des Mikroskoptisches 110 bewegt werden kann.

Eine Beleuchtungseinheit 126 des Lasermikrodissektionssystems 100 ist dazu ausgebildet, Beleuchtungslicht 128 zum Beleuchten eines Objektes, beispielsweise der Probe 102, des Dissektates 104 und/oder des Auffanggefäßes 106, zu erzeugen. Beispielsweise umfasst die Beleuchtungseinheit 126 eine Anregungslichtquelle, wie eine weitere Laserlichtquelle, zum Erzeugen von Anregungslicht, das Fluorophore zum Emittieren von Fluoreszenzlicht anregt. Die Beleuchtungseinheit 126 kann aber auch eine Weißlichtquelle zum Beleuchten des Objekts mit Weißlicht für eine Auflicht- oder Durchlichtbeleuchtung umfassen. Rein beispielhaft ist die gezeigte Beleuchtungseinheit 126 dazu ausgebildet, einen Strahl aus dem Beleuchtungslicht 128 zu erzeugen, der von einem zweiten Strahlteiler 130 in das momentan in die optische Achse O des Lasermikrodissektionssystems 100 geschwenkte Objektiv 114 gelenkt und auf das zu beleuchtende Objekt gerichtet wird.

Eine optische Detektionseinheit 132 des Lasermikrodissektionssystems 100 umfasst rein beispielhaft das momentan in die optische Achse O des Lasermikrodissektionssystems 100 geschwenkte Objektiv 114, den ersten Strahlteiler 124, den zweiten Strahlteiler 130 und ein Detektorelement 134. Von der Probe 102 oder dem Dissektat 104 ausgehendes Detektionslicht, beispielsweise reflektiertes Beleuchtungslicht 128 oder das von der Probe 102 bzw. dem Dissektat 104 ausgehende Fluoreszenzlicht, wird von dem ersten Strahlteiler 124 und dem zweiten Strahlteiler 130 auf das Detektorelement 134 gelenkt. Das Detektorelement 134 erfasst das Detektionslicht, um ein Bild der Probe 102 bzw. des Dissektates 104 zu erzeugen. Das Detektorelement 134 erzeugt ferner dem Bild entsprechende Bilddaten. Die optische Detektionseinheit 132 kann insbesondere dazu ausgebildet sein, Fluoreszenzbilder zu erfassen.

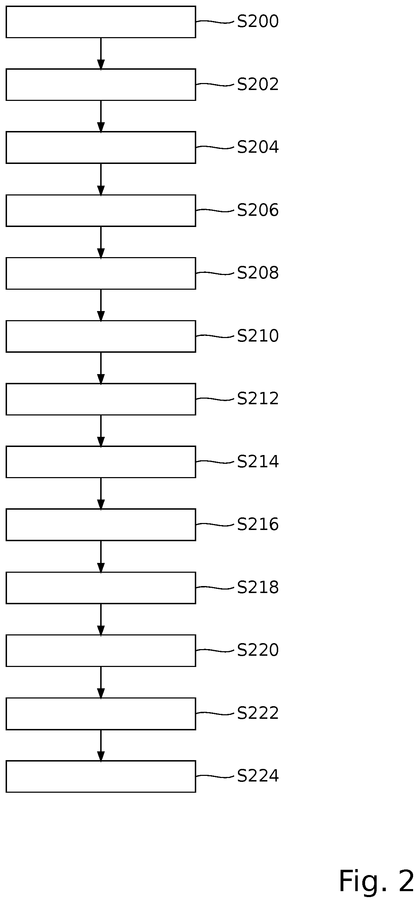

Das Lasermikrodissektionssystem 100 umfasst ferner eine Steuereinheit 136, die mit dem Mikroskoptisch 110, dem Objektivrevolver 112, der Schneideeinheit 120, der Beleuchtungseinheit 126 sowie der optischen Detektionseinheit 132 verbunden und dazu ausgebildet ist, die vorgenannten Elemente zu steuern. Die Steuereinheit 136 umfasst beispielhaft eine Benutzereingabeeinheit 138, die dazu ausgebildet ist, Benutzereingaben des Benutzers zu empfangen. Ferner ist die Steuereinheit 136 dazu ausgebildet, das Lasermikrodissektionssystem 100 zum Durchführen eines Verfahrens zur Lasermikrodissektion zu steuern. Das Verfahren wird im Folgenden unter Bezugnahme auf Figur 2 beschrieben.

Figur 2 zeigt einen Ablaufplan des Verfahrens zur Lasermikrodissektion.

Das Verfahren kann insbesondere durch das anhand von Figur 1 beschriebene Lasermikrodissektionssystem 100 durchgeführt werden. Bei dem Verfahren wird das Dissektat 104 aus der Probe 102 geschnitten und durch die Auffangeinheit 108 aufgefangen. Es wird ferner ermittelt, ob das Dissektat 104 korrekt in dem Auffanggefäß 106 aufgefangen wurde. Das Verfahren wird in Schritt S200 gestartet.

In dem optionalen Schritt S202 wird die Auffangeinheit 108 in das Lasermikrodissektionssystem 100 eingebracht und auf dem Mikroskoptisch 110 angeordnet. Dies kann manuell durch dem Benutzer erfolgen oder durch einen Roboterarm, der dazu ausgebildet ist, die Auffangeinheit 108 zu handhaben. Der Roboterarm kann durch die Steuereinheit 136 gesteuert werden. Die Auffangeinheit 108 kann auch ein Teil des Mikroskoptisches 110 sein. Bei einer solchen Ausführungsform des Lasermikrodissektionssystems 100 können in Schritt S202 einzelne Auffanggefäße 106 in der Auffangeinheit 108 angeordnet werden, beispielsweise manuell durch den Benutzer oder automatisch durch den Roboterarm. Bei einer alternativen Ausführungsform des Verfahrens sind die Auffangeinheit 108 und die Auffanggefäße 106 bereits angeordnet, wenn das Verfahren in Schritt S200 gestartet wird.

In dem ebenfalls optionalen Schritt S204 steuert die Steuereinheit 136 die optische Detektionseinheit 132 zum Erfassen eines Vorherbildes eines Inneren eines der Auffanggefäße 106 der Auffangeinheit 108 an, in welches das Dissektat 104 aufgefangen werden soll. Die optische Detektionseinheit 132 erzeugt dem Vorherbild entsprechende Vorherbilddaten. Die Vorherbilddaten können im weiteren Verlauf des Verfahrens verwendet werden, um einen Bildvergleich vorzunehmen und so zu ermitteln, ob das Dissektat 104 korrekt in dem Auffanggefäß 106 aufgefangen wurde.

In Schritt S206 wird die Probe 102 oberhalb des Auffanggefäßes 106 angeordnet, so dass das aus der Probe 102 geschnittene Dissektat 104 in dem Auffanggefäß 106 aufgefangen werden kann. Die Probe 102 kann insbesondere manuell durch den Benutzer angeordnet werden. Alternativ kann die Probe 102 auch durch den Roboterarm oberhalb des zumindest einen Auffanggefäßes 106 angeordnet werden. In dem optionalen Schritt S208 steuert die Steuereinheit 136 die optische Detektionseinheit 132 zum Erfassen eines ersten Bildes der Probe 102 an. Die Detektionseinheit 132 erzeugt dem ersten Bild der Probe 102 entsprechende erste Probenbilddaten. Auf Grundlage des ersten Bildes der Probe 102 kann beispielsweise der Benutzer im folgenden Schritt S210 eine ROI auswählen, die von dem Lasermikrodissektionssystem 100 geschnitten werden soll. Ein beispielhaftes erstes Bild der Probe 102 ist im Folgenden anhand von Figur 3 beschrieben.

In Schritt S210 wird der auszuschneidende Bereich der Probe 102 gewählt. Dies kann vollautomatisch durch die Steuereinheit 136 auf Grundlage der ersten Probenbilddaten erfolgen. Beispielsweise ermittelt die Steuereinheit 136 auf Grundlage der ersten Probenbilddaten die Positionen von bestimmten Strukturen der Probe 102, zum Beispiel einen bestimmten Typ Zellen. Alternativ kann der auszuschneide Bereich der Probe 102 durch den Benutzer bestimmt werden, insbesondere durch eine Benutzereingabe. Im folgenden Schritt S212 steuert die Steuereinheit 136 dann die Schneideeinheit 120 an, den auszuschneidenden Bereich zum Erzeugen des Dissektates 104 auszuschneiden.

In dem optionalen Schritt S214 steuert die Steuereinheit 136 die optische Detektionseinheit 132 zum Erfassen eines zweiten Bildes der Probe 102 an. Die Detektionseinheit 132 erzeugt dem zweiten Bild der Probe 102 entsprechende zweite Probenbilddaten. Auf Grundlage der zweiten Probenbilddaten kann die Steuereinheit 136 insbesondere eine Größe des Dissektates 104 ermitteln, beispielsweise eine Länge, eine Breite, einen Durchmesser und/oder eine Fläche des Dissektates 104, in dem die Größe des Dissektates 104 mit einer entsprechenden Größe des ausgeschnittenen Bereichs gleichgesetzt wird. Die Größe des Dissektates 104 kann ebenfalls anhand einer entsprechenden Größe der ROI bestimmt werden, beispielsweise auf Grundlage der ersten Bilddaten. Ferner kann der Benutzer die Größe des Dissektates 104 auch als eine Benutzereingabe eingeben.

In Schritt S216 steuert die Steuereinheit 136 die optische Detektionseinheit 132 zum Erfassen eines Inhaltsbildes des Inneren des Auffanggefäßes 106 an. Die optische Detektionseinheit 132 erzeugt dem Inhaltsbild entsprechende Inhaltsbilddaten. Das Inhaltsbild kann als ein Fluoreszenzbild erfasst werden. So kann das Dissektat 104 besonders leicht an von dem Dissektat 104 ausgehendem Fluoreszenzlicht identifiziert werden, das beispielsweise von in die Probe 102 eingebrachten Fluorophoren ausgeht oder von einer Autofluoreszenz erzeugt wird. Insbesondere die Membran 304, auf der die Probe 102 aufgebracht ist, kann Autofluoreszenz aufweisen. Insbesondere steuert die Steuereinheit 136 die optische Detektionseinheit 132 zum Erfassen des Inhaltsbildes derart an, das dieses als ein Volumenbild oder ein Bild mit erweiterter Tiefenschärfe erfasst wird. In beiden Fällen entspricht das Inhaltsbild einem ausgedehnten Volumen in dem Inneren des Auffanggefäßes 106. So kann auch ermittelt werden, ob das Dissektat 104 an einer Wand des Auffanggefäßes 106 haftet. Um ein Volumenbild oder ein Bild mit erweiterter Tiefenschärfe erfassen zu können, kann die Steuereinheit 136 insbesondere auch den Mikroskoptisch 110 ansteuern, um diesen in z-Richtung zu verschieben.

Darauf ermittelt die Steuereinheit 136 in Schritt S218 anhand der Inhaltsbilddaten, ob sich das Dissektat 104 in dem Auffanggefäß 106 befindet. Wurde, beispielsweise in Schritt S216 die Größe des Dissektates 104 ermittelt, kann die Steuereinheit 136 die Größe bei der Ermittlung berücksichtigen. Bei einem ersten beispielhaften Verfahren vergleicht die Steuereinheit 136 das Inhaltsbild mit dem in Schritt S204 erfassten Vorherbild, um zu ermitteln, ob das Dissektat 104 in dem Auffanggefäß 106 aufgefangen wurde. Alternativ oder zusätzlich zu dem Vorherbild kann die Steuereinheit 136 das Inhaltsbild auch mit zumindest einem Referenzbild vergleichen, das ein Bild eines Inneren eines Auffanggefäßes 106 gleichen Typs wie das Auffanggefäß 106 ist, in dem das Dissektat 104 aufgefangen werden soll. Beispielsweise ein Bild eines Wells einer Mikrowellplatte, der die gleichen Abmessungen hat, wie der zum Auffangen des Dissektates 104 verwendete Well. Um die Bilder zu vergleichen, verarbeitet die Steuereinheit 136 die Inhaltsbilddaten sowie die Vorherbilddaten und/oder Referenzbilddaten, die dem Referenzbild entsprechen, unter Verwendung eines Bildvergleichsverfahrens, insbesondere eines Maschinenlernverfahrens. Bei einem weiteren beispielhaften Verfahren verwendet die Steuereinheit 136 ein Maschinenlernverfahren, das zumindest anhand der Referenzbilddaten trainiert worden ist, um zu ermitteln, ob das Dissektat 104 in dem Auffanggefäß 106 aufgefangen wurde. Beispielsweise kann das Maschinenlernverfahren ein Bildsegmentierungsverfahren, insbesondere ein Verfahren zur semantischen Segmentierung sein, welches das Inhaltsbild segmentiert, um das Dissektat 104 zu identifizieren.

In dem optionalen Schritt S220 ermittelt die Steuereinheit 136 auf Grundlage der Inhaltsbilddaten eine Position des Dissektates 104 in dem Auffanggefäß 106. Dies erlaubt es, das Dissektat 104 in dem Auffanggefäß 106 zu finden, um beispielsweise eine Detailaufnahme des Dissektates 104 zu erfassen. In dem weiteren optionalen Schritt S222 steuert die Steuereinheit 136 die optische Detektionseinheit 132 zum Erfassen eines Verifikationsbildes des Inneren des Auffanggefäßes 106 an. Die optische Detektionseinheit 132 erzeugt dem Verifikationsbild entsprechende Verifikationsbilddaten. Insbesondere ist das Verifikationsbild eine Detailaufnahme des Inneren des Auffanggefäßes 106 an der in Schritt S220 ermittelten Position des Dissektates 104. Alternativ oder zusätzlich kann das Verifikationsbild ein Fluoreszenzbild sein, so dass das Dissektat 104 anhand von Fluoreszenzlicht identifiziert werden kann. Anhand der Verifikationsbildes kann bestätigt werden, dass das Dissektat 104 korrekt aufgefangen wurde.

Das Verfahren wird in Schritt S224 beendet.

Figur 3 zeigt in schematischer Darstellung den Probenträger 300 auf dem die Probe 102 angeordnet ist.

Der in Figur 3 gezeigte Probenträger 300 hat rein beispielhaft die Abmessungen eines Objektträgers, wie er in der Mikroskopie gebräuchlich ist. Dadurch ist der Probenträger 300 mit weiteren Laborgeräten, beispielsweise einem Mikroskop oder einem Slidescanner kompatibel. Der Probenträger 300 weist einen Rahmen 302 mit einer Aussparung auf, über welche die Membran 304 gespannt ist, auf der die Probe 102 aufgebracht ist und die mit Hilfe des Laserlichtes 122 geschnitten werden kann. Die Membran 304 ist beispielsweise aus Polyethylennaphthalat gefertigt, das eine Fluoreszenz im sichtbaren Licht aufweist. Als alternative Variante des Probenträgers (hier nicht dargestellt) kann auch ein Glas-Slide ohne Öffnung verwendet werden, über welches eine laserschneidbare Folie gespannt ist, die nur im Randbereich des Glas-Slides fixiert ist, beispielweise durch Kleben.

Figur 3 hat ferner einen durch ein gestricheltes Quadrat dargestellten Ausschnitt 306, der dem Vorherbild entspricht. Innerhalb dieses Ausschnittes 306 befindet sich die ROI 308, d.h. der Bereich der Probe 102, der ausgeschnitten werden soll, um das Dissektat 102 zu erhalten. Die ROI 308 ist rein beispielhaft kreisförmig und durch einen gestrichelten Kreis dargestellt.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar.

### Bezugszeichenliste

- 100: Lasermikrodissektionssystem
- 102: Probe
- 104: Dissektat
- 106: Auffanggefäß
- 108: Auffangeinheit
- 110: Mikroskoptisch
- 112: Objektivrevolver
- 114: Objektiv
- 116: Laserlichtquelle
- 118: Ablenkeinheit
- 120: Schneideeinheit
- 122: Laserlicht
- 124: Strahlteiler
- 126: Beleuchtungseinheit
- 128: Beleuchtungslicht
- 130: Strahlteiler
- 132: Detektionseinheit
- 134: Detektorelement
- 136: Steuereinheit
- 138: Benutzereingabeeinheit
- 300: Probenträger
- 302: Rahmen
- 304: Membran
- 306: Ausschnitt
- 308: ROI

## Patentansprüche

1. Lasermikrodissektionssystem (100), umfassend
einen Mikroskoptisch (110), der dazu ausgebildet ist, eine zu schneidende Probe (102) und eine Auffangeinheit (108), die zumindest ein unterhalb der Probe (102) angeordnetes Auffanggefäß (106) umfasst, aufzunehmen, wobei das zumindest eine Auffanggefäß (106) derart angeordnet und dazu ausgebildet ist, ein aus der Probe (102) geschnittenes Dissektat (104) aufzufangen;
eine optische Detektionseinheit (132), die dazu ausgebildet ist, ein Inhaltsbild eines Inneren des zumindest einen Auffanggefäßes (106) zu erfassen und dem Inhaltsbild entsprechende Inhaltsbilddaten zu erzeugen; und
eine Steuereinheit (136), die dazu ausgebildet ist, die Inhaltsbilddaten zu verarbeiten und auf Grundlage der Inhaltsbilddaten und unter Berücksichtigung von Vorherbilddaten, die einem Vorherbild des Inneren des zumindest einen Auffanggefäßes (106) entsprechen, das aufgenommen wurde, bevor das Dissektat (104) aus der Probe (102) geschnitten wurde, und/oder unter Berücksichtigung von Referenzbilddaten, die einem Referenzbild eines Inneren eines Auffanggefäßes (106) von gleichem Typ wie das zumindest eine Auffanggefäß (106) entsprechen, zu ermitteln, ob sich das Dissektat (104) in dem zumindest einen Auffanggefäß (106) befindet.

2. Lasermikrodissektionssystem (100) nach Anspruch 1, wobei die Steuereinheit (136) dazu ausgebildet ist, auf Grundlage der Inhaltsbilddaten eine Position des Dissektates (104) in dem Inneren des zumindest einen Auffanggefäßes (106) zu ermitteln.

3. Lasermikrodissektionssystem (100) nach Anspruch 1 oder 2, wobei die Steuereinheit (136) dazu ausgebildet ist, die Inhaltsbilddaten mit den Vorherbilddaten und/oder den Referenzbilddaten zu vergleichen und auf Grundlage dieses Vergleiches zu ermitteln, ob sich das Dissektat (104) in dem zumindest einen Auffanggefäß (106) befindet.

4. Lasermikrodissektionssystem (100) nach einem der vorhergehenden Ansprüche, wobei die Steuereinheit (136) dazu ausgebildet ist, unter Verwendung eines Maschinenlernverfahrens zu ermitteln, ob sich das Dissektat (104) in dem zumindest einen Auffanggefäß (106) befindet.

5. Lasermikrodissektionssystem (100) nach Anspruch 4, wobei das Maschinenlernverfahren unter Verwendung zumindest der Referenzbilddaten als Trainingsdaten darauf trainiert worden ist, zu ermitteln, ob sich das Dissektat (104) in dem zumindest einen Auffanggefäß (106) befindet.

6. Lasermikrodissektionssystem (100) nach Anspruch 4 oder 5, wobei das Maschinenlernverfahren darauf trainiert worden ist, eine Bildsegmentierung des Inhaltsbildes durchzuführen, um zu ermitteln, ob sich das Dissektat (104) in dem zumindest einen Auffanggefäß (106) befindet.

7. Lasermikrodissektionssystem (100) nach einem der vorhergehenden Ansprüche, wobei die Steuereinheit (136) dazu ausgebildet ist, zumindest die optische Detektionseinheit (132) anzusteuern, um das Inhaltsbild als ein Volumenbild und/oder ein Bild mit erweiterter Tiefenschärfe zu erfassen.

8. Lasermikrodissektionssystem (100) nach Anspruch 7, wobei der Mikroskoptisch (110) motorisch entlang einer optischen Achse der optischen Detektionseinheit (132) verfahrbar ist, und wobei die Steuereinheit (136) dazu ausgebildet ist, den Mikroskoptisch (110) entlang der optischen Achse der optischen Detektionseinheit (132) zu verfahren, um das Inhaltsbild als ein Volumenbild und/oder ein Bild mit erweiterter Tiefenschärfe zu erfassen.

9. Lasermikrodissektionssystem (100) nach einem der vorhergehenden Ansprüche, wobei die Steuereinheit (136) dazu ausgebildet ist, unter Berücksichtigung einer Größe des Dissektates (104) zu ermitteln, ob sich das Dissektat (104) in dem zumindest einen Auffanggefäß (106) befindet.

10. Lasermikrodissektionssystem (100) nach Anspruch 9, umfassend eine Benutzereingabeeinheit (138), die dazu ausgebildet ist, eine Benutzereingabe zu empfangen, wobei die Steuereinheit (136) dazu ausgebildet ist, auf Grundlage einer entsprechenden Benutzereingabe die Größe des Dissektates (104) zu ermitteln.

11. Lasermikrodissektionssystem (100) nach Anspruch 9 oder 10, wobei die Steuereinheit (136) dazu ausgebildet ist, die Größe des Dissektates (104) auf Grundlage von Probenbilddaten zu ermitteln, die einem Bild der Probe (102) entsprechen, das erfasst wurde, bevor oder nachdem das Dissektat (104) aus der Probe (102) geschnitten wurde.

12. Lasermikrodissektionssystem (100) nach einem der vorhergehenden Ansprüche, umfassend eine Beleuchtungseinheit (126), die dazu ausgebildet ist, Anregungslicht zum Anregen von Fluorophoren zu emittieren, wobei die optische Detektionseinheit (132) dazu ausgebildet ist, Fluoreszenzbilder zu erfassen.

13. Lasermikrodissektionssystem (100) nach Anspruch 12, wobei die Steuereinheit (136) dazu ausgebildet ist, die Beleuchtungseinheit (126) und die optische Detektionseinheit (132) anzusteuern, um das Inhaltsbild als ein Fluoreszenzbild zu erfassen.

14. Lasermikrodissektionssystem (100) nach Anspruch 12 oder 13, wobei die Steuereinheit (136) dazu ausgebildet ist, die Beleuchtungseinheit (126) und die optische Detektionseinheit (132) anzusteuern, um ein Verifikationsbild als ein Fluoreszenzbild zu erfassen, wenn die Steuereinheit (136) ermittelt hat, dass sich das Dissektat (104) in dem zumindest einen Auffanggefäß (106) befindet, dem Verifikationsbild entsprechende Verifikationsbilddaten zu erzeugen und auf Grundlage der Verifikationsbilddaten zu bestätigen, dass sich das Dissektat (104) in dem zumindest einen Auffanggefäß (106) befindet.

15. Verfahren zur Lasermikrodissektion, bei dem:
a) eine Probe (102) oberhalb zumindest eines Auffanggefäßes (106) einer Auffangeinheit (108) angeordnet wird, wobei das zumindest eine Auffanggefäß (106) derart angeordnet und dazu ausgebildet ist, ein aus der Probe (102) geschnittenes Dissektat (104) aufzufangen;
b) ein Inhaltsbild eines Inneren des zumindest einen Auffanggefäßes (106) erfasst wird und dem Inhaltsbild entsprechende Inhaltsbilddaten erzeugt werden; und
c) auf Grundlage der Inhaltsbilddaten und unter Berücksichtigung von Vorherbilddaten, die einem Vorherbild des Inneren des zumindest einen Auffanggefäßes (106) entsprechen, das aufgenommen wurde, bevor das Dissektat (104) aus der Probe (102) geschnitten wurde, und/oder unter Berücksichtigung von Referenzbilddaten, die einem Referenzbild eines Inneren eines Auffanggefäßes (106) von gleichem Typ wie das zumindest eine Auffanggefäß (106) entsprechen, ermittelt wird, ob sich das Dissektat (104) in dem zumindest einen Auffanggefäß (106) befindet.
